# EUROPÄISCHE PATENTSCHRIFT

(11) **EP 3 532 229 B1**
(45) Veröffentlichungstag und Bekanntmachung des Hinweises auf die Patenterteilung: **14.01.2026**
(21) Anmeldenummer: 16788114.3
(22) Anmeldetag: 28.10.2016
(51) Int. Cl.: B23D 35/00, A62B 3/00, B23D 17/00, B23D 29/00, B23D 31/00

(54) **SCHERMESSER MIT EINEM SCHNEIDGERÄT**
KNIFE WITH A CUTTING TOOL
LAME AVEC UN OUTIL DE DECOUPAGE

(43) Veröffentlichungstag der Anmeldung: 04.09.2019
(73) Patentinhaber: Lukas Hydraulik GmbH, 91058 Erlangen (DE)
(72) Erfinder: TISCHLER, Herbert, 91058 Erlangen (DE); HORNE, Tammy, Gastonia North Carolina 28052 (US); SAUERBIER, Carsten, 91207 Lauf (DE)
(74) Vertreter: Gleim Petri Patent- und Rechtsanwaltspartnerschaft mbB
(86) Internationale Anmeldenummer: PCT/EP2016/076067
(87) Internationale Veröffentlichungsnummer: WO 2018/077419

(56) Entgegenhaltungen:
- EP-A1- 0 259 742
- WO-A1-2018/077419
- AT-A4- 511 457
- DE-A1- 1 921 924
- DE-A1- 10 243 308
- DE-A1- 102009 059 940
- FR-A6- 2 203 296
- GB-A- 191 411 477
- SU-A2- 529 019
- US-A- 4 417 510
- US-A1- 2014 319 257
- US-A1- 2014 331 843

## Beschreibung

Die vorliegende Erfindung betrifft ein tragbares, insbesondere hydraulisches Schneidgerät, vorzugsweise Rettungsgerät, gemäß dem Oberbegriff des Anspruchs 1. Ein solches Schneidgerät ist aus dem Dokument AT 511 457 A4 bekannt.

### Technologischer Hintergrund

Hydraulische Arbeitsgeräte für den portablen Einsatz werden üblicherweise von der Feuerwehr für Rettungseinsätze verwendet. Ein gattungsgemäßes hydraulisches Arbeitsgerät ist beispielsweise ein Schneidgerät, welches vor allem zum Schneiden von Karosserieteilen und Fahrzeugtüren eingesetzt wird. Derartige Schneidgeräte besitzen in der Regel eine Hydrauliksteuerung mit einer Hydraulikpumpe, die sich entweder direkt am Schneidgerät oder in einem Einsatzfahrzeug befinden kann. Zudem umfasst das Schneidgerät zwei gegeneinander verschwenkbare Werkzeughälften, die jeweils ein Schermesser zum Zertrennen bzw. Schneiden des Schneidguts, wie z. B. die Säulen einer PKW-Karosserie, umfassen. Die Schermesser besitzen hierbei zueinander orientierte und in der Regel gerade verlaufende Anlageflächen, entlang derer die Schermesser beim Verschwenken, d. h. beim Öffnen und Schließen, aneinander vorbei geführt werden.

An die gattungsgemäßen Schneidgeräte werden zunehmend größere Anforderungen in Bezug auf Schneidwirkung, Belastbarkeit, Haltbarkeit, Gewicht und Energieverbrauch gestellt. Entscheidend sind hierbei vor allem die Schneidwirkung und die Haltbarkeit der Schermesser. Neben der Materialauswahl und damit der Optimierung der Materialeigenschaften des Schermessers trägt vor allem die Geometrie des Schermessers zur Verbesserung der Schneidwirkung bei. Der Fokus liegt hierbei darauf, die Schneidfestigkeit der Messer so zu verbessern, dass mit weniger Leistung gleiches oder stärkeres Material geschnitten werden kann.

### Druckschriftlicher Stand der Technik

Die Patentschrift DE 10 2009 059 940 B4 beschreibt ein Schermesser für Schneidgeräte zum Zerschneiden oder Durchtrennen von profilierten Baustählen. Die Schermesser sind mit austauschbaren Schneideinsätzen ausgestattet. Die Schneideinsätze sind hierbei in einer zweiseitig offenen Aufnahmetasche untergebracht und durch mehrere Spannpratzen gehalten. Die Spannpratzen bewirken mittels Schrauben- und Arretierstiften eine Schraub- und Stiftverbindung zwischen dem Schermesser und dem Schneideinsatz. Diese Spannpratzen werden über eine zusätzliche Ausnehmung am Schneideinsatz angebracht und benötigen dadurch einen zusätzlichen Formschluss. Die Aufnahmetasche ist hierbei derart ausgestaltet, dass der Schneideinsatz parallel zur Anlagefläche des Schermessers in die Aussparung einschiebbar ist. Aufgrund des komplizierten Aufbaus des Schneideinsatzes und der Aufnahmetasche und der komplexen Befestigung mit Spannpratzen und Stiften oder Schrauben ergeben sich zusätzliche Probleme bezüglich der Fertigungszeit und der Fertigungskosten. Ferner kann die Funktionalität und die Haltbarkeit verringert sein, indem die zusätzlichen Ausnehmungen am Schneideinsatz einen zusätzlichen Formschluss mit den Spannpratzen erzeugen, der zu Spannungen im Bereich der Befestigungsmittel führt, wobei ein Materialbruch die Folge sein kann.

Die Druckschrift AT 511 457 A4 beschreibt ein Schermesser für ein Schneidgerät, welches innerhalb eines Sitzes des Schermessers einen Messereinsatz umfasst, der als Schneidkeil ausgebildet ist. Der Schneidkeil bildet hierbei eine Schneidkante, indem von der Schneidkante aus eine Freifläche d. h. eine Anlagefläche und eine dazu winkelig verlaufende Druckfläche d. h. Außenfläche vorgesehen sind. Die Außenfläche ist hierbei durchgehend gerade mit gleichbleibender Neigung ausgestaltet. Der Messereinsatz wird parallel zur Anlagefläche eingeschoben und bildet einen quer zur Freifläche wirkenden Formschluss entlang einer abgeschrägten Formschlussfläche, die sich am unteren Ende des Sitzes befindet. Ferner ist der Messereinsatz mittels quer zur Freifläche orientierten, in fluchtenden Bohrungen im Grundkörper des Schermessers und im Messereinsatz angeordneten stiftförmigen Steckverbindungen am Grundkörper befestigt. Durch den spitzen Aufbau des Messereinsatzes erhöht sich die Bruchgefahr, da sich bei aufbauendem Druck die beiden Schermesser gegeneinander verdrehen. Die Spitze des Schermessers wirkt hierbei jeweils als Drehpunkt, d. h. daraus resultiert ein erhöhtes Risiko eines Ausbrechens der Schneidkante des Messereinsatzes während des Schneidvorgangs. Zudem wird die Kraft bzw. der Druck, der durch das Zerschneiden des Schneidguts auf den Messereinsatz übertragen wird, entweder auf die Steckverbindung oder keilartig auf die Formschlussfläche unterhalb des Messereinsatzes übertragen, wodurch es in beiden Fällen zu Spannungsspitzen und damit zum Materialbruch und damit zu einer verringerten Haltbarkeit kommt.

Die DE 102 43 308 A1 offenbart eine Vorrichtung an Schrottscheren oder dergleichen mit mehreren Backenarmen und Schneidelementen, die jeweils an den einander zugewandten Seiten zumindest zweier benachbarter Backenarme angeordnet sind, wobei die Schneidelemente benachbarter Backenarme bei ihrer gegenseitigen Annäherung - die durch eine Schwenkbewegung der sie tragenden Backenarme relativ zueinander hervorgerufen wird - in der Schneidstellung teilweise miteinander einen Schneidspalt bilden. Zumindest jeweils eines der beim Schneidvorgang zusammenwirkenden Schneidelemente ist lösbar an einem Keilelement befestigt, wobei sich das betreffende Keilelement über eine Stützfläche an einer entsprechend ausgerichteten Führungsfläche des Backenarms abstützt. Die Schneidelemente befinden sich dabei in einer entsprechenden Ausnehmung der Keilelemente. Die Ausnehmung ist derart ausgestaltet, dass das Schneidelement bzw. dessen in Richtung Schneidspalt bzw. zum gegenüberliegenden Backenarm orientierte Schneidfläche bündig zum Keilelement bzw. dem Backenarm liegt. Das Schneidelement wird demnach entsprechend parallel zur Innenseite des Keilelements sowie des Backenarms in die Ausnehmung eingesetzt.

Aus DE 1 921 924 A1 ist eine Befestigung für Scherenmesser an einer Kaltschere bekannt, bei der das Scherenmesser durch eine Anpresskraft gegen einen am Rahmen befestigten Schlitten gehalten wird. Das jeweilige Scherenmesser weist durch Bohrungen in Schlitten und Rahmen durchsteckbare Zuganker mit Köpfen auf, die durch Druck auf einen hinter die Köpfe einschiebbaren Haltekamm gespannt werden. Die Scherenmesser sind bündig zur Anlagefläche des Schlittens in entsprechende Aussparungen eingesetzt.

Die aus US 2014/0319257 A1 bekannte hydraulisch betätigte Schere umfasst eine erste Backe und eine zweite Backe, die dazu ausgebildet ist, in einer Scherbewegung an der ersten Backe vorbeizugleiten. Eine Schneidplatte ist an zumindest einer Seite der ersten und zweiten Backen befestigt, wobei die Schneidplatte eine Scherkante und eine Scheroberfläche definiert. Die Schneidplatte ist in einer Schneidplattenausnehmung angeordnet. Eine abgeschrägte Distanzplatte ist zwischen der Schneidplatte und der Seitenwand der Schneidplattenausnehmung angeordnet. Statt einer abgeschrägten Distanzplatte kann auch eine abgeschrägte Seitenwand bereitgestellt werden. Die Schneidplatte weist einen im Wesentlichen rechteckigen Querschnitt auf. Die in der Ausnehmung angeordnete Schneidplatte bzw. deren Scheroberfläche weist in dieser Anordnung einen positiven Sturz in Bezug auf eine Ebene senkrecht zu den Backen auf, wobei deren Schneidrand näher an der gegenüberliegenden Backe liegt als der Rest der Schneidfläche. Indem die Schneidfläche in einem abgeschrägten Zustand gehalten wird, sodass der Schneidrand sich zu der gegenüberliegenden Backe erstreckt, nimmt die Kraft, die zur Bewegung der Backen aneinander vorbei erforderlich ist, ab, während der Schneidrand einen entsprechenden Schneidrand an der entsprechenden Backe passiert.

Die FR 2.203.296 A6 betrifft ein Schneidrad für eine Vorrichtung zum isostatischen Abstechen von Teilen, insbesondere von Rohren. Das Schneidrad weist am Ende seiner Schneide eine abgerundete Schneidkante auf, auf die ein erster konischer Abschnitt folgt, der einen größeren spitzen Winkel besitzt als der sich anschließende konische Abschnitt, wobei zwischen den beiden konischen Abschnitten eine Verbindungskehle ausgebildet ist.

Aus der US 4,417,510 A ist eine Schneidpresse bekannt, die an ihrem Messerblock zwei nebeneinander angeordnete, längliche Scherenmesser aufweist. Die Scherenmesser sind zwischen senkrechten Messersitzen und horizontalen Messersitzen angeordnet. Jedes Scherenmesser hat einen im Wesentlichen rechteckigen Querschnitt und eine Schneidkante entlang jeder seiner Kanten. Die Schermesser sind schräg in dem Messerblock angeordnet, sodass deren nach außen weisende Schneidkante höher ist als die innenliegende. Die Schermesser sowie die Messersitze sind mittels Senkschrauben an dem Messerblock befestigt.

Die AT 511 457 A4 betrifft ein Schermesser für ein Schneidgerät umfassend einen Grundkörper mit einem Sitz und einem am Sitz angeordneten, einen Schneidkeil bildenden Messereinsatz, wobei der Schneidkeil durch eine Freifläche und eine dazu winkelige Druckfläche eine Schneidkante bildet. Dabei weist der Sitz zumindest eine in Richtung quer zur Freifläche wirksame Hinterschneidungsfläche auf, die bei eingesetztem Messereinsatz mit zumindest einer an dieser ausgebildeten Formschlussfläche zusammenwirkt, wodurch ein quer zur Freifläche wirkender Formschluss hergestellt ist. Der Messereinsatz ist parallel zur Anlagefläche des Grundkörpers in den Sitz einschiebbar.

Das aus DE 10 2009 059 940 A1 bekannte Schermesser für Schneidgeräte ist mit einem austauschbaren Schneideinsatz ausgestattet. Der Schneideinsatz ist durch mechanische Mittel mit Hilfe eines Form- und Kraftschlusses in einer zweiseitig offenen Aufnahmetasche gehalten und festgespannt. Der Schneideinsatz ist parallel zur Anlagefläche des Schermessers in die Aufnahmetasche einschiebbar.

GB 11477 A offenbart ein Messer mit einer Aussparung zur Aufnahme einer Schneidleiste. Die Seiten der Aussparung sind in vertikaler sowie horizontaler Richtung schwalbenschwanzförmig ausgebildet. Die Schneidleiste ist senkrecht zur Anlagefläche des Messers in die Aussparung einschiebbar.

### Aufgabe der vorliegenden Erfindung

Die Aufgabe der vorliegenden Erfindung besteht darin, ein gattungsgemäßes Schneidgerät mit einem neuartigen Aufbau zur Verfügung zu stellen, bei welchem die Schneidwirkung, die Standfestigkeit sowie die Haltbarkeit verbessert werden.

### Lösung der Aufgabe

Die vorstehende Aufgabe wird durch die gesamte Lehre des Anspruchs 1 gelöst. Zweckmäßige Ausgestaltungen der Erfindung sind in den Unteransprüchen beansprucht.

Die vorliegende Erfindung beansprucht ein tragbares, insbesondere hydraulisches Schneidgerät für den portablen Einsatz, vorzugsweise Rettungsgerät, mit einem Gehäuse sowie einem, vorzugsweise manuell bedienbarem, hydraulischen Steuerventil, und zwei mit einer Drehachse verbundene Werkzeughälften, die jeweils ein Schermesser mit einem Schneideinsatz umfassen, wobei der Schneidbereich eine Aussparung zur Aufnahme des Schneideinsatzes aufweist.

Erfindungsgemäß ist bei dem Schneidgerät die Aussparung derart ausgestaltet, dass der Schneideinsatz in einem spitzen Winkel δ zur Anlagefläche des Schermessers in die Aussparung eingeschoben ist. Dadurch kann der Schneideinsatz in besonders einfacher Weise in das Schermesser eingesetzt werden. Zudem ermöglicht diese Maßnahme eine vorteilhafte Kraftaufnahme durch den Messerkörper. Komplizierte Befestigungselemente, wie z. B. Spannpratzen, werden nicht benötigt. Dadurch werden die Schneidwirkung und die Haltbarkeit des Schermessers verbessert. Zudem ist an mindestens einer Seite der Aussparung eine Hinterschneidung vorgesehen, die dazu dient, den Schneideinsatz geführt und durch eine einfache Bewegung in die Aussparung einzusetzen und in Position zu halten. Das Wechseln des Schneideinsatzes wird dadurch besonders vereinfacht.

Vorzugsweise kann an beiden Seiten der Aussparung eine Hinterschneidung vorgesehen sein.

Zweckmäßigerweise kann mindestens ein Befestigungselement zur Befestigung des Schneideinsatzes vorgesehen sein, dessen Orientierung in einem schrägen Winkel ε, d. h. vorzugsweise in einem spitzen Winkel ε zur Anlagefläche in Richtung Schneidkante betrachtet verläuft. Daraus resultiert der Vorteil, dass der Druck, der durch das Zerschneiden des Schneidguts auf den Messereinsatz übertragen wird, nicht auf die Steckverbindung, sondern auf die Formschlussfläche unterhalb des Messereinsatzes übertragen wird, wodurch das Risiko eines Materialbruchs verringert und damit die Haltbarkeit erhöht wird. Vorzugsweise ist das Befestigungselement senkrecht zur Einschubrichtung des Schneideinsatzes orientiert.

Vorzugsweise erstreckt sich ein erster Flächenabschnitt der Außenfläche von der Schneidkante weg entlang einer Orthogonalen O, welche im Bereich der Schneidkante auf die Anlagefläche trifft, oder in einem spitzen Winkel α bezogen auf die Orthogonale O. Ferner schließt sich ein zweiter Flächenabschnitt an das Ende des ersten Flächenabschnitts an und ist ausgehend vom ersten Flächenabschnitt in einem spitzen Winkel β, bezogen auf die Orthogonale O, orientiert. An das Ende des zweiten Flächenabschnitts schließt sich ein dritter Flächenabschnitt an, der in einem spitzen Winkel γ, bezogen auf die Orthogonale O, orientiert ist. Darüber hinaus ist der Winkel α kleiner als der Winkel β und der Winkel β ist kleiner als der Winkel γ. Daraus resultiert der Vorteil, dass eine Druckeinsparung im Bereich der Schneidfläche des Schermessers erfolgt. Das Risiko eines Ausbrechens der Schneidkante wird dadurch verringert und die Standfestigkeit sowie die Haltbarkeit des Schermessers erhöht.

Zweckmäßigerweise kann jeweils im Querschnitt des Schermessers betrachtet die Breite des ersten Flächenabschnitts geringer als die Breite des zweiten Flächenabschnitts und die Breite des zweiten Flächenabschnitts geringer als die Breite des dritten Flächenabschnitts sein. Dadurch, dass der erste Flächenabschnitt eine sehr geringe Breite aufweist, kann das Risiko eines Abrutschens bzw. Ausbrechens der Schneidkante vor allem bei hochfestem Material weitestgehend vermieden werden, jedoch die den Schneidvorgang begünstigende Keilwirkung der ersten abgewinkelten genutzt werden, um das Schneidgut zu zertrennen.

Ferner kann der Winkel α in einem Bereich von 0,5 bis 5°, vorzugsweise in einem Bereich von 1 bis 3°, besonders vorzugsweise in einem Bereich von 1,5 bis 2,5° liegen. Bei Verwenden eines sehr kleinen Winkels α resultiert überraschend der Effekt, dass eine Druckeinsparung erfolgt, z. B. 3-8 % Druckeinsparung bei einem Winkel von α=2° im Vergleich zu einem Winkel α=0°.

Zweckmäßigerweise kann der Winkel γ größer 45°, vorzugsweise größer/gleich 48°, besonders vorzugsweise größer/gleich 50° sein. Dadurch wird die Schneidwirkung des Schermessers noch zusätzlich verbessert. Überraschend hat sich gezeigt, dass mit einem Winkel von γ=50° eine besonders gute Schneidwirkung erzielt werden kann. Der Winkel γ beträgt maximal 80°, vorzugsweise 70°, besonders vorzugsweise 60°.

Vorzugsweise ist im Bereich der Außenfläche eine Oberflächenprofilierung vorgesehen. Durch das Einbringen einer Profilierung wird die Schneidkraft auf das zu schneidende Material in einen höheren Schneiddruck umgewandelt. Hierdurch wird das zu schneidende Material einer größeren Beanspruchung ausgesetzt und es kommt zu einem früheren Versagen.

Zweckmäßigerweise kann die Oberflächenprofilierung lediglich im Bereich des zweiten und/oder dritten Flächenabschnitts, vorzugsweise im Bereich beider Flächenabschnitte vorgesehen sein, im Bereich des ersten Flächenabschnitts soll keine Oberflächenprofilierung vorgesehen sein. Der erste Flächenabschnitt dient hierbei dazu, das Schneidgut in Richtung zum Schneidgerät zu ziehen, sodass der Hauptschneiddruck durch den hinteren Teil des Schneidbereichs auf das Schneidgut erfolgt. Dadurch wird die Schneidwirkung in besonderem Maße erhöht. Eine Oberflächenprofilierung innerhalb des ersten Flächenabschnitts hingegen erschwert die Zugwirkung des Schneidgerätes.

Ferner kann sich die Oberflächenprofilierung über die jeweils gesamte Breite des jeweiligen Flächenabschnitts erstrecken. Dadurch kann eine möglichst gleichmäßige Krafteinwirkung erfolgen. Zudem werden zusätzliche Spannungsunterschiede durch unterschiedlich ausgestaltete Flächenbereiche der Außenkante des Schermessers verhindert.

In bevorzugter Weise kann die Oberflächenprofilierung einzelne nebeneinander verlaufende Nuten umfassen, wobei die Nuten jeweils zwei gegenüberliegende Nutwandungen aufweisen. Eine derartige Oberflächenprofilierung hat einen besonders hervorzuhebenden Effekt in Bezug auf die Druckeinsparung am Schermesser gezeigt, der im Bereich von 3-8 % im Vergleich zu herkömmlich ausgestalteten Schermessern liegt.

Vorzugsweise sind die gegenüberliegenden Nutwandungen einer Nut derart ausgestaltet, dass eine Nutwandung steil, vorzugsweise gekrümmt, und die andere Nutwandung abgeflacht verläuft. Die steil verlaufende Nutwandung ist hierbei jeweils auf der Seite der Nut angeordnet, die der Messerspitze des Schermessers zugewandt ist, sodass die Nuten eine Vorzugsorientierung aufweisen, indem die Nutwandungen von der Messerspitze wegorientiert ausgestaltet sind. Daraus resultiert der Vorteil, dass das Einziehen des Schneidguts zum Beginn des Schneidvorgangs sowie das Festhalten des Schneidguts im hinteren Teil des Schneidbereichs während des Schneidvorgangs begünstigt werden.

Alternativ oder zusätzlich sind die Nuten wellen- oder sägezahnartig, u-förmig, v-förmig oder trapezförmig ausgestaltet.

Zweckmäßigerweise kann die Schneidkante konkav gekrümmt sein. Daraus resultiert der Vorteil, dass das Schneidgut während des Schneidvorgangs, zumindest zu Beginn des Schneidvorgangs, in Richtung Schneidgerät gezogen wird. Die Schneidwirkung wird dadurch in besonderem Maße verbessert.

In bevorzugter Weise ist das Schermesser als Schmiedeteil gefertigt oder wird z. B. aus einem Halbzeug oder einer Materialplatte gefräst.

Das Schermesser kann in einfacher Weise am Schneidgerät montiert werden, indem der Montagebereich eine Durchgangsöffnung zur Aufnahme eines einem Schermesserpaars gemeinsamen Drehachsenelements, z. B. ein Zentralbolzen, und eine Durchgangsöffnung zur Aufnahme eines antriebsseitigen Betätigungselements, z. B. ein Sicherungsbolzen, mit dem das Schermesser an ein Hebelglied eines Werkzeugarmes befestigt wird, besitzt.

Erfindungsgemäß weist der Schneidbereich eine Aussparung zur Aufnahme eines Schneideinsatzes auf. Die Aussparung befindet sich praktischerweise zumindest teilweise im mittleren und hinteren Teil des Schneidbereichs, der dazu dient, den Hauptschneiddruck auf das Schneidgut zu übertragen. Der Schneidbereich befindet sich vorzugsweise bündig in der Aussparung.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte perspektivische Darstellung eines erfindungsgemäßen Schneidgerätes;
- Fig. 2: eine vereinfachte perspektivische Darstellung eines erfindungsgemäßen Schermessers;
- Fig. 3: eine vereinfachte, lediglich schematische Querschnittdarstellung durch ein erfindungsgemäßes Schermesser;
- Fig. 4a: eine vereinfachte perspektivische Querschnittdarstellung durch einen Teil einer Ausgestaltung der erfindungsgemäßen Oberflächenprofilierung;
- Fig. 4b: eine zweite vereinfachte perspektivische Querschnittdarstellung durch einen Teil einer zweiten Ausgestaltung der erfindungsgemäßen Oberflächenprofilierung;
- Fig. 5: eine vereinfachte perspektivische Darstellung eines erfindungsgemäßen Schermessers mit Schneideinsatz;
- Fig. 6a: eine vereinfachte perspektivische Teildarstellung des erfindungsgemäßen Schermessers aus Fig. 5 mit fehlendem Schneideinsatz;

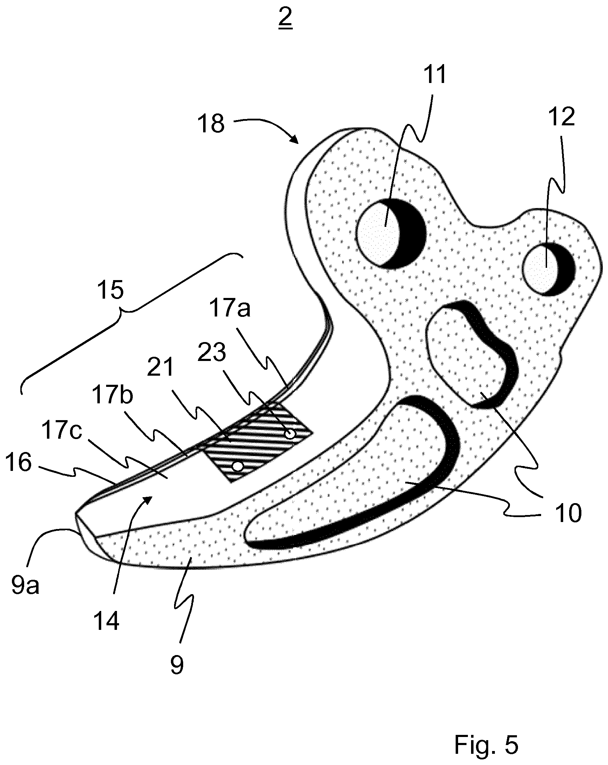

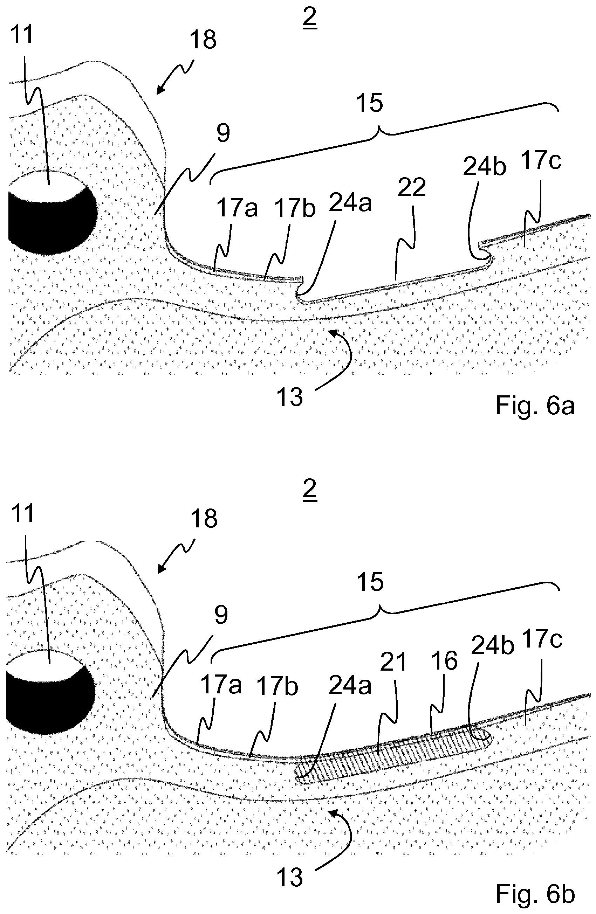

- Fig. 6a: eine zweite vereinfachte perspektivische Teildarstellung des erfindungsgemäßen Schermessers aus Fig. 5 mit eingesetztem Schneideinsatz, sowie

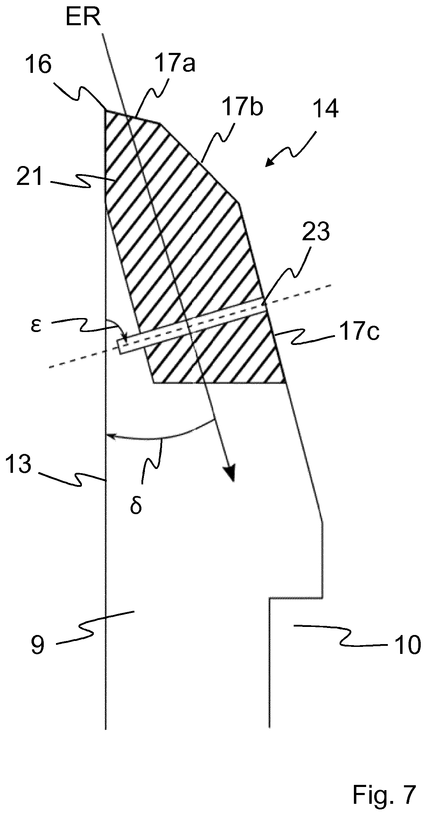

- Fig. 7: eine vereinfachte, lediglich schematische Querschnittdarstellung durch das erfindungsgemäße Schermesser aus Fig. 5.

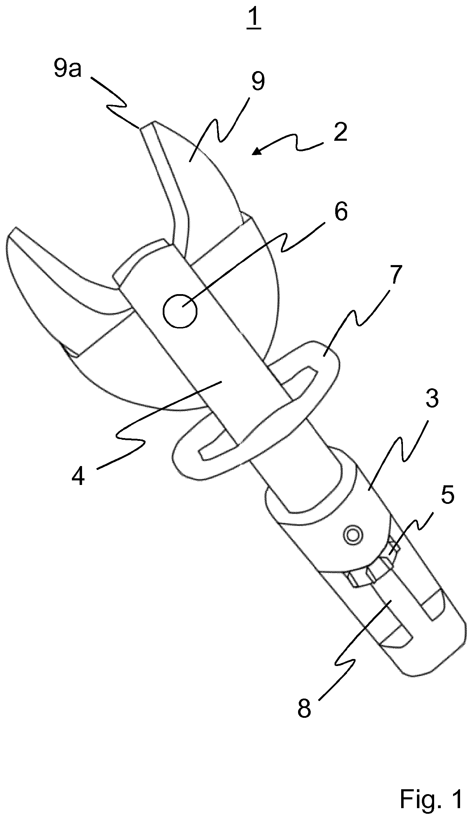

Bezugsziffer 1 in Fig. 1 bezeichnet ein portables Schneidgerät zum Schneiden und Durchtrennen von Karosserieteilen und Fahrzeugtüren. Das Schneidgerät 1 besitzt ein Gehäuse 3 und einen Hydraulikzylinder 4, an dem zwei Werkzeughälften angebracht sind, welche jeweils ein Schermesser 2 mit einem Messerkörper 9 und einer daran befindlichen Messerspitze 9a umfassen. Die Schermesser 2 sind an einer gemeinsamen Drehachse 6 angeordnet, sodass die Schermesser 2 gegeneinander verschwenkt werden können. Ferner sind im Bereich des Gehäuses 3 und/oder des Hydraulikzylinders 4 ein Tragegriff 7 und ein Handgriff 8 zum Tragen des Schneidgeräts 1 angeordnet. Zudem befindet sich im Bereich des Handgriffs 8 ein manuell bedienbares Steuerventil 5, welches dem Anwender ermöglicht, das Schneidgerät manuell zu bedienen (Schneiden, Öffnen sowie Leerlauf).

In Fig. 5 ist das erfindungsgemäße Schermesser 2 des Schneidgeräts 1 im Detail dargestellt. Der Messerkörper 9 kann vorzugsweise als Schmiedeteil gefertigt sein oder aus einem Halbzeug oder einer Materialplatte gefräst werden. Der Messerkörper 9 umfasst Ausnehmungen 10, die zur Gewichtsreduzierung des Schermessers 2 dienen. Ferner besitzt das Schermesser 2 einen Montagebereich 18, mittels dem das Schermesser 2 am Schneidgerät 1 montiert werden kann. Der Montagebereich 18 umfasst eine Durchgangsöffnung 11, die dazu dient, ein, in Fig. 5 nicht dargestelltes, Drehachselement, z. B. einen Zentralbolzen, aufzunehmen, um das Schermesser 2 an der gemeinsamen Drehachse 6 zu befestigen. Zudem umfasst der Montagebereich 18 eine Durchgangsöffnung 12, die ein, in Fig. 5 nicht dargestelltes, antriebseitiges Betätigungselement aufnehmen kann, z. B. einen Sicherungsbolzen, mittels dem das Schermesser 2 an einem Hebelglied eines Werkzeugarmes montiert werden kann, um das Schermesser 2 anzusteuern.

Das Schermesser 2 umfasst einen vorzugsweise konkaven Schneidbereich 15, der zum Schneiden und Trennen des Schneidguts dient. Das Schneidgut wird hierbei durch eine Schneidkante 16 geschnitten und entlang einer Außenfläche 14 des Messerkörpers 9 auseinander gedrückt. Die Außenfläche 14 umfasst erfindungsgemäß einen ersten Flächenabschnitt 17a, der sich von der Schneidkante 16 aus erstreckt. An das Ende des ersten Flächenabschnitts 17a schließt sich ein zweiter Flächenabschnitt 17b an, an dem sich ein dritter Flächenabschnitt 17c anschließt.

Erfindungsgemäß besitzt das Schermesser 2 vorzugsweise im mittleren und hinteren Teil des Schneidbereichs 15 einen Schneideinsatz 21. Der Schneideinsatz 21 ist über Befestigungselemente 23 am Messerkörper 9 des Schermessers 2 befestigt. Als Befestigungselement 23 können z. B. Schrauben, Bolzen oder dergleichen eingesetzt werden. Der Schneideinsatz 21 wird in dem Bereich des Schneidbereichs 15 eingesetzt, welcher beim Schneiden den größten Belastungen ausgesetzt ist und somit am ehesten verschleißt. Dadurch kann, im Falle eines Verschleißens dieses Bereichs, der Schneideinsatz 21 ausgewechselt werden und somit die Funktion des Schermessers 2 wiederhergestellt werden, ohne dass das gesamte Schermesser 2 gewechselt werden muss. Zudem kann der Schneideinsatz 21 aus härterem bzw. widerstandsfähigerem Material als das Grundmaterial des Schermessers 2 gefertigt werden, um das Risiko des Verschleißens zu verringern und die Schneidkraft zu verbessern. Dadurch kann die Schneidwirkung und die Haltbarkeit des gesamten Schermessers 2 bei nahezu gleich bleibenden Kosten und Gewicht verbessert werden. Der Schneideinsatz 21 kann zudem ebenfalls die Flächenabschnitte 17a, 17b, 17c umfassen.

Zweckmäßigerweise besitzt das Schermesser 2 im Bereich des Schneidbereichs 15 eine in Fig. 6a dargestellte Aussparung 22, die zur Aufnahme des Schneideinsatzes 21 dient. Die Aussparung 22 besitzt stirnseitige Hinterschneidungen 24a, 24b, die dazu vorgesehen sind, den Schneideinsatz 21 in Position zu halten und/oder diesen beim Einschieben zu führen. Der Schneideinsatz 21 sowie die Aussparung 22 sind, wie in Fig. 6b gezeigt, derart gefertigt, dass zwischen Schneideinsatz 21 und Aussparung 22 ein Formschluss entsteht, sobald der Schneideinsatz 21 in die Aussparung 22 vollständig eingesetzt bzw. eingeschoben ist. Der Formschluss dient hierbei dazu, den weitaus größten Anteil an Schubspannungen, die während des Schneidens auftreten, durch Druckspannungen auf die Bauelemente des Schermessers 2 zu beaufschlagen.

Fig. 7 zeigt einen vereinfachten Querschnitt durch das Schermesser 2 im mittleren Schneidbereich 15. Bezugsziffer 13 bezeichnet eine der Außenfläche 14 gegenüberliegende Anlagefläche. Beim Öffnen und Schließen des Schermesserpaares eines Schneidgeräts 1 werden die Schermesser 2 entlang ihrer Anlageflächen 13 aneinander vorbeigeführt. Der Schneideinsatz 21 wird, wie in Fig. 7 gezeigt, in einem vorzugsweise spitzen Winkel δ zur Anlagefläche 13 eingeschoben. Die Einschubrichtung ER des Schneideinsatzes 21 ist in Fig. 7 mit einem schwarzen Pfeil markiert. Der Schneideinsatz 21 bildet hierbei einen Teil der Außenfläche 14 und umfasst demgemäß, wie auch die Außenfläche 14, drei Flächenabschnitte 17a, 17b, 17c. Nach dem Einschieben des Schneideinsatzes 21 wird der Schneideinsatz 21 über Befestigungselemente 23 am Messerkörper 9 befestigt. Die Orientierung des Befestigungselements 23 verläuft hierbei in einem spitzen Winkel ε zur Anlagefläche 13 bzw. im Wesentlichen senkrecht zur Einschubrichtung ER. Die Befestigung ist hierbei geometrisch derart konzipiert, dass diese den Schneideinsatz 21 innerhalb der Aussparung 22 in Position halten, jedoch möglichst wenig Belastung, wie z. B. Kerbspannungsspitzen oder hohe Schubspannungen, ertragen müssen, indem der größere Teil der Belastungen, z. B. in Form von Druckspannung, auf den Messerkörper 9 durch den Formschluss zwischen Schneideinsatz 21 und Aussparung 22 beaufschlagt wird.

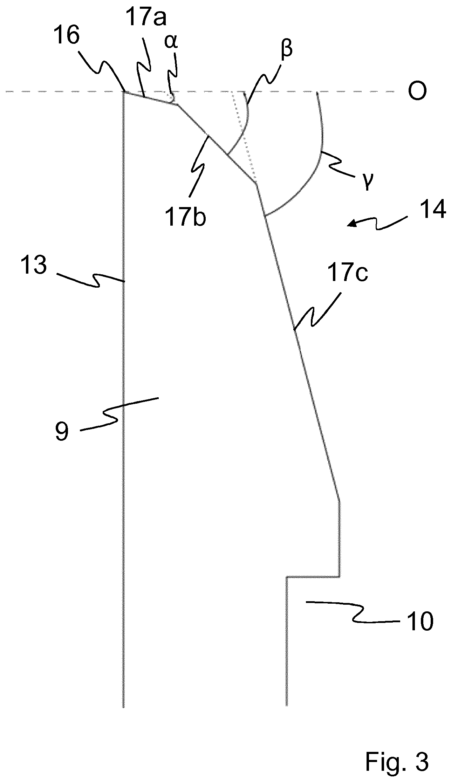

Fig. 3 zeigt einen weiteren vereinfachten Querschnitt durch das Schermesser 2 im Schneidbereich 15 neben dem Schneideinsatz 21. Der erste Flächenabschnitt 17a erstreckt sich von der Schneidkante 16 aus in einem geringen Winkel α bezogen auf die Orthogonale O. Die Orthogonale O verläuft hierbei senkrecht zur Anlagefläche 13 und trifft auf diese im Bereich der Schneidkante 16. Der Winkel α beträgt vorzugsweise 0,5°, 1,0°, 1,5°, 2,0° oder 2,5°. Der sich an dem ersten Flächenabschnitt 17a anschließende zweite Flächenabschnitt 17b erstreckt sich in einem spitzen Winkel β, bezogen auf die Orthogonale O. Der Winkel β liegt hierbei vorzugsweise im Bereich von 15° bis 35°, vorzugsweise von 20° bis 25°. An den zweiten Flächenabschnitt 17b schließt sich der dritte Flächenabschnitt 17c an, der bezogen auf die Orthogonale O in einem spitzen Winkel γ orientiert ist. Der Winkel γ beträgt vorzugsweise 40°, 45° oder 50°. Demgemäß ist der Winkel α kleiner als der Winkel β und der Winkel β kleiner als der Winkel γ. Der Winkel γ beträgt maximal 80°, vorzugsweise 70°, besonders vorzugsweise 60°.

Die Breite des ersten Flächenabschnitts 17a liegt vorzugsweise im Bereich von 0,5 bis 1,5 mm, besonders vorzugsweise liegt die Breite des ersten Flächenabschnitts 17a im Bereich von 0,5 mm bis 0,7 mm. Im Querschnitt des Schermessers 2 betrachtet, ist die Breite des ersten Flächenabschnitts 17a geringer als die Breite des zweiten Flächenabschnitts 17b und die Breite des zweiten Flächenabschnitts 17b geringer als die Breite des dritten Flächenabschnitts 17c.

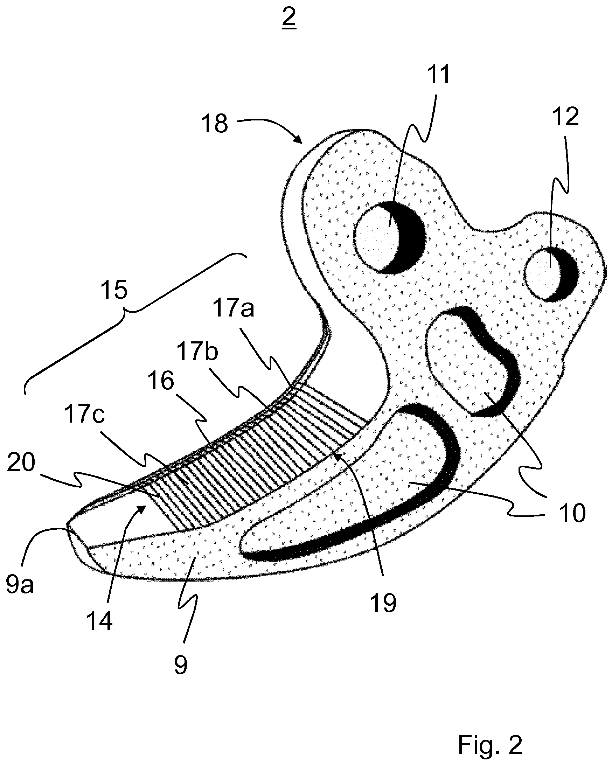

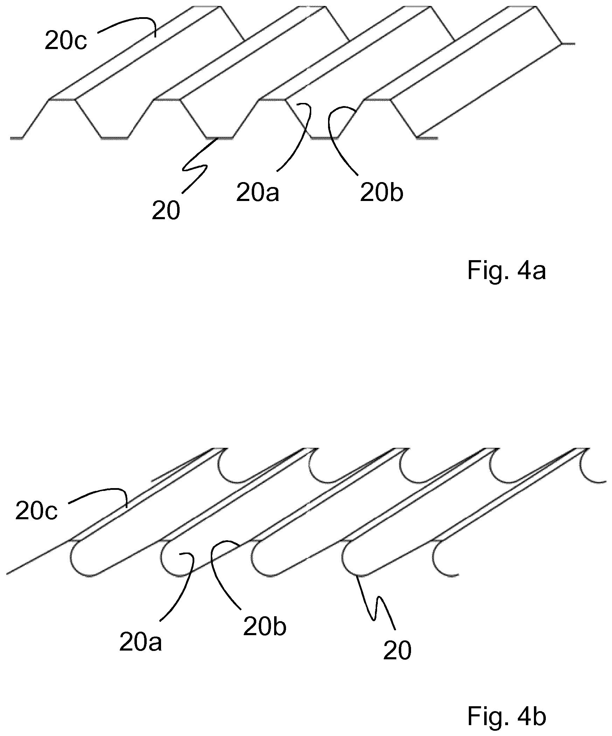

Fig. 2 zeigt eine weitere Ausgestaltung des Schermessers 2, bei dem der erfindungsgemäße Schneideinsatz 21 der Übersichtlichkeit halber nicht dargestellt ist. Das Schermesser 2 in Fig. 2 weist im Schneidbereich 15 eine Oberflächenprofilierung 19 auf, die sich auch, zumindest teilweise, über den erfindungsgemäßen Schneideinsatz 21 erstrecken kann. Die Oberflächenprofilierung 19 kann beispielsweise aus in Fig. 4a dargestellten, nebeneinander verlaufenden Nuten 20 bestehen. Die Nuten 20 umfassen jeweils zwei gegenüberliegende Nutwandungen 20a, 20b und sind trapezförmig ausgebildet, wobei die jeweiligen Trapeze oberseitige Plateaus 20c ausbilden, die die Oberflächenprofilierung 19 nach außen, d. h. zum Schneidgut hin, begrenzen. Durch das Einbringen derartiger Nuten 20 wird die Schneidkraft auf das zu schneidende Material in einen höheren Schneiddruck umgewandelt. Hierdurch wird das zu schneidende Material einer größeren Beanspruchung ausgesetzt und es kommt zu einem früheren Versagen. Durch die Ausgestaltung der Außenfläche 14 mit derartigen Nuten 20 erfolgt in der Regel eine Druckeinsparung um 3-8 %. Somit besteht die Möglichkeit, bei gleichbleibender Kraft und gleichbleibendem Gewicht die Schneidleistung zu steigern.

Zweckmäßigerweise befindet sich die Oberflächenprofilierung 19 lediglich im Bereich des zweiten und dritten Flächenabschnitts 17b, 17c, vorzugsweise über die gesamte Breite des jeweiligen Flächenabschnitts 17b und/oder 17c verlaufend. Diese Ausgestaltung hat den Vorteil, dass das Schneidgut zu Beginn des Schneidvorgangs entlang der Schneidkante 16 in Richtung zu der Drehachse 6 gezogen wird, sodass der Hauptschneiddruck durch den hinteren Teil des Schneidbereichs 15 auf das Schneidgut erfolgt. Im Bereich des ersten Flächenabschnitts 17a ist keine Oberflächenprofilierung 19 vorgesehen. Das Einziehen des Schneidguts in Richtung Schneidgerät 1 wird ferner dadurch begünstigt, dass die Schneidkante 16 konkav gekrümmt ist.

Um den Effekt des Einziehens des Schneidguts weiter zu verbessern, d. h. das Einziehen auch während des anfänglichen Schneidvorgangs zu ermöglichen, kann eine spezielle Ausgestaltung der Oberflächenprofilierung 19 bzw. der Nuten 20 gemäß Fig. 4b vorgenommen werden. Die Nuten 20 besitzen hierbei eine Nutwandung 20a, die steil und gekrümmt verläuft, und eine Nutwandung 20b, die abgeflacht verläuft. Derartige Nuten 20 können beispielsweise mit einem Prismenfräser, der schräg an das Material angestellt wird, eingefräst werden. Je nachdem wie der Abstand der eingefrästen Nuten 20 gewählt wird, befinden sich zwischen den Nuten 20 Plateaus 20c, welche die Oberflächenprofilierung 19 zu der dem Schneidgut zugewandten Seite hin begrenzen.

### BEZUGSZEICHENLISTE

- 1: Schneidgerät
- 2: Schermesser
- 3: Gehäuse
- 4: Hydraulikzylinder
- 5: Steuerventil
- 6: Drehachse
- 7: Traggriff
- 8: Handgriff
- 9: Messerkörper
- 9a: Messerspitze
- 10: Ausnehmung
- 11: Durchgangsöffnung
- 12: Durchgangsöffnung
- 13: Anlagefläche
- 14: Außenfläche
- 15: Schneidbereich
- 16: Schneidkante
- 17a: erster Flächenabschnitt
- 17b: zweiter Flächenabschnitt
- 17c: dritter Flächenabschnitt
- 18: Montagebereich
- 19: Oberflächenprofilierung
- 20: Nut
- 20a: Nutwandung
- 20b: Nutwandung
- 20c: Plateau
- 21: Schneideinsatz
- 22: Aussparung
- 23: Befestigungselement
- 24a: Hinterschneidung
- 24b: Hinterschneidung

- O: Orthogonale
- ER: Einschubrichtung
- α: Winkel
- β: Winkel
- γ: Winkel
- δ: Winkel
- ε: Winkel

## Patentansprüche

1. Tragbares, insbesondere hydraulisches Schneidgerät (1) für den portablen Einsatz, vorzugsweise Rettungsgerät, mit
einem Gehäuse (3),
einem Hydraulikzylinder (4),
einem manuell bedienbaren, hydraulischen Steuerventil (5),
zwei mit einer Drehachse (6) verbundene Werkzeughälften, die jeweils ein Schermesser (2) mit einem Schneideinsatz (21) umfassen,
wobei das Schermesser (2) einen
Messerkörper (9) aufweist, wobei der Messerkörper (9) einen Montagebereich (18) sowie einen Schneidbereich (15) aufweist,
das Schermesser weiter aufweist eine Schneidkante (16) im Schneidbereich (15), eine auf der einen Seite der Schneidkante (16) befindliche Anlagefläche (13) für ein weiteres Schermesser sowie eine auf der anderen Seite der Schneidkante (16) befindliche Außenfläche (14), welche dazu vorgesehen ist, auf das Schnittgut einzuwirken, wobei
der Schneidbereich (15) eine Aussparung (22) zur Aufnahme des Schneideinsatzes (21) aufweist,
**dadurch gekennzeichnet, dass**
die Aussparung (22) derart ausgestaltet ist, dass der Schneideinsatz (21) in einem spitzen Winkel δ zur Anlagefläche (13) des Schermessers (2) in die Aussparung (22) eingeschoben ist und an mindestens einer Seite der Aussparung (22) eine Hinterschneidung (24a, 24b) vorgesehen ist.

2. Schneidgerät nach Anspruch 1, **dadurch gekennzeichnet, dass** mindestens ein Befestigungselement (23) vorgesehen ist, dessen Orientierung in einem schrägen Winkel ε zur Anlagefläche (13), vorzugsweise in einem spitzen Winkel ε zur Anlagefläche (13) in Richtung Schneidkante (16) betrachtet, verläuft.

3. Schneidgerät nach mindestens einem der vorhergehenden Ansprüche, **dadurch gekennzeichnet, dass** sich ein erster Flächenabschnitt (17a) der Außenfläche (14) von der Schneidkante (16) entlang der Orthogonalen O, die im Bereich der Schneidkante (16) auf die Anlagefläche (13) trifft, oder in einem spitzen Winkel α bezogen auf die Orthogonale O erstreckt,
sich ein zweiter Flächenabschnitt (17b) an das Ende des ersten Flächenabschnitts (17a) anschließt und in einem spitzen Winkel β bezogen auf die Orthogonale O orientiert ist,
sich ein dritter Flächenabschnitt (17c) an das Ende des zweiten Flächenabschnitts (17b) anschließt und in einem spitzen Winkel γ bezogen auf die Orthogonale O orientiert ist, wobei
der Winkel α kleiner als der Winkel β und der Winkel β kleiner als der Winkel γ ist.

4. Schneidgerät nach Anspruch 3, **dadurch gekennzeichnet, dass** jeweils im Querschnitt des Schermessers betrachtet die Breite des ersten Flächenabschnitts (17a) geringer ist als die Breite des zweiten Flächenabschnitts (17b) und die Breite des zweiten Flächenabschnitts (17b) geringer ist als die Breite des dritten Flächenabschnitts (17c).

5. Schneidgerät nach Anspruch 3 oder 4, **dadurch gekennzeichnet, dass** der Winkel α in einem Bereich von 0,5° bis 5°, vorzugsweise in einem Bereich von 1° bis 3°, besonders vorzugsweise in einem Bereich von 1,5° bis 2,5° liegt.

6. Schneidgerät nach mindestens einem der Ansprüche 3 bis 5, **dadurch gekennzeichnet, dass** der Winkel γ größer/gleich 45°, vorzugsweise größer/gleich 48°, besonders vorzugsweise größer/gleich 50° ist.

7. Schneidgerät nach mindestens einem der vorhergehenden Ansprüche, **dadurch gekennzeichnet, dass** im Bereich der Außenfläche (14) eine Oberflächenprofilierung (19) vorgesehen ist, wobei die Oberflächenprofilierung (19) einzelne nebeneinander verlaufende Nuten (20) umfasst.

8. Schneidgerät nach Anspruch 7, **dadurch gekennzeichnet, dass** sich die Oberflächenprofilierung (19) lediglich im Bereich des zweiten und/oder dritten Flächenabschnitts (17b und/oder 17c), vorzugsweise im Bereich beider Flächenabschnitte (17b, 17c) vorgesehen ist.

9. Schneidgerät nach Anspruch 8, **dadurch gekennzeichnet, dass** sich die Oberflächenprofilierung (19) über die jeweils gesamte Breite des jeweiligen Flächenabschnitts (17b und/oder 17c) erstreckt.

10. Schneidgerät nach Anspruch 7 bis 9, **dadurch gekennzeichnet, dass** die Nuten (20) jeweils zwei gegenüberliegende Nutwandungen (20a, 20b) aufweisen, eine Nutwandung (20a) steil, vorzugsweise gekrümmt und die andere Nutwandung (20b) abgeflacht verläuft, wobei die steil verlaufende Nutwandung (20a) auf der Seite der jeweiligen Nut (20) angeordnet ist, die der Messerspitze (9a) des Schermessers (2) zugewandt ist.

11. Schneidgerät nach Anspruch 7 bis 10, **dadurch gekennzeichnet, dass** die Nut (20) u-förmig, v-förmig oder trapezförmig ausgebildet ist.

12. Schneidgerät nach mindestens einem der vorhergehenden Ansprüche, **dadurch gekennzeichnet, dass** die Schneidkante (16) konkav gekrümmt ist.

13. Schneidgerät nach mindestens einem der vorhergehenden Ansprüche, **dadurch gekennzeichnet, dass** der Montagebereich (18) eine Durchgangsöffnung (11) für die Aufnahme eines einem Schermesserpaars gemeinsamen Drehachsenelements und eine Durchgangsöffnung (12) für ein antriebsseitiges Betätigungselement vorgesehen ist.

14. Schneidgerät nach mindestens einem der vorhergehenden Ansprüche, **dadurch gekennzeichnet, dass** das Schneidgerät ein Rettungsgerät ist.

15. Schneidgerät nach mindestens einem der vorhergehenden Ansprüche, **dadurch gekennzeichnet, dass** an beiden Seiten der Aussparung (22) eine Hinterschneidung (24a, 24b) vorgesehen ist.

## Claims

1. Portable, in particular hydraulic, cutting device (1), preferably a rescue device, having
a housing (3),
a hydraulic cylinder (4),
a manually operable hydraulic control valve (5),
two tool halves, which are connected to an axial pivot (6) and each comprise a shear blade (2) with a cutting insert (21),
wherein the shear blade (2) has a
blade body (9), wherein the blade body (9) has a mounting region (18) and also a cutting region (15),
and the shear blade also has a cutting edge (16) in the cutting region (15), a contact surface (13), which is located on the one side of the cutting edge (16) and is intended for a further shear blade, and also an outer surface (14), which is located on the other side of the cutting edge (16) and is intended to act on the item(s) to be cut, wherein
the cutting region (15) has a recess (22) for receiving the cutting insert (21),
**characterized in that**
the recess (22) is configured such that the cutting insert (21) is pushed into the recess (22) at an acute angle δ to the contact surface (13) of the shear blade (2), and an undercut (24a, 24b) is provided on at least one side of the recess (22).

2. Cutting device according to Claim 1, **characterized by** the provision of at least one fastening element (23), the orientation of which runs at an oblique angle ε in relation to the contact surface (13), preferably at an acute angle ε in relation to the contact surface (13), as seen in the direction of the cutting edge (16).

3. Cutting device according to at least one of the preceding claims, **characterized in that** a first surface portion (17a) of the outer surface (14) extends from the cutting edge (16) along the orthogonal O, which meets the contact surface (13) in the region of the cutting edge (16), or at an acute angle α in relation to the orthogonal O,
a second surface portion (17b) adjoins the end of the first surface portion (17a) and is oriented at an acute angle β in relation to the orthogonal O,
a third surface portion (17c) adjoins the end of the second surface portion (17b) and is oriented at an acute angle γ in relation to the orthogonal O, wherein
the angle α is smaller than the angle β and the angle β is smaller than the angle γ.

4. Cutting device according to Claim 3, **characterized in that**, when viewed in each case in the cross section of the shear blade, the width of the first surface portion (17a) is smaller than the width of the second surface portion (17b) and the width of the second surface portion (17b) is smaller than the width of the third surface portion (17c).

5. Cutting device according to Claim 3 or 4, **characterized in that** the angle α ranges from 0.5° to 5°, preferably ranges from 1° to 3°, particularly preferably ranges from 1.5° to 2.5°.

6. Cutting device according to at least one of Claims 3 to 5, **characterized in that** the angle γ is greater than/equal to 45°, preferably greater than/equal to 48°, particularly preferably greater than/equal to 50°.

7. Cutting device according to at least one of the preceding claims, **characterized in that** a surface profiling (19) is provided in the region of the outer surface (14), wherein the surface profiling (19) comprises individual adjacent grooves (20).

8. Cutting device according to Claim 7, **characterized in that** the surface profiling (19) is provided only in the region of the second and/or third surface portion (17b and/or 17c), preferably in the region of both surface portions (17b, 17c).

9. Cutting device according to Claim 8, **characterized in that** the surface profiling (19) extends over the entire width of the respective surface portion (17b and/or 17c).

10. Cutting device according to Claims 7 to 9, **characterized in that** the grooves (20) each have two opposite groove walls (20a, 20b), one groove wall (20a) being steep, preferably curved, and the other groove wall (20b) being flattened, wherein the steep groove wall (20a) is arranged on that side of the respective groove (20) which faces the blade tip (9a) of the shear blade (2).

11. Cutting device according to Claims 7 to 10, **characterized in that** the groove (20) is u-shaped, v-shaped or trapezoidal.

12. Cutting device according to at least one of the preceding claims, **characterized in that** the cutting edge (16) is curved concavely.

13. Cutting device according to at least one of the preceding claims, **characterized in that** the mounting region (18) is provided with a through-opening (11) for receiving an axial-pivot element common to a pair of shear blades and also a through-opening (12) for a drive-side actuating element.

14. Cutting device according to at least one of the preceding claims, **characterized in that** the cutting device is a rescue device.

15. Cutting device according to at least one of the preceding claims, **characterized in that** an undercut (24a, 24b) is provided on both sides of the recess (22).

## Revendications

1. Appareil de coupe (1) portatif, en particulier hydraulique, pour une utilisation portable, de préférence appareil de sauvetage, présentant
un boîtier (3),
un vérin hydraulique (4),
une vanne de commande (5) hydraulique, actionnable manuellement,
deux moitiés d'outil reliées par un axe de rotation (6), qui comprennent à chaque fois une lame de cisaillement (2) pourvue d'un insert de coupe (21),
la lame de cisaillement (2) présentant
un corps (9) de lame, le corps (9) de lame présentant une zone de montage (18) ainsi qu'une zone de coupe (15),
la lame de cisaillement présentant en outre une arête de coupe (16) dans la zone de coupe (15), une surface d'appui (13) se trouvant sur un côté de l'arête de coupe (16) pour une autre lame de cisaillement ainsi qu'une surface externe (14), se trouvant sur l'autre côté de l'arête de coupe (16) et prévue pour agir sur le produit à couper, la zone de coupe (15) présentant un évidement (22) destiné à recevoir l'insert de coupe (21),
**caractérisé en ce que**
l'évidement (22) est conçu de telle sorte que l'insert de coupe (21) est inséré dans l'évidement (22) sous un angle aigu δ par rapport à la surface d'appui (13) de la lame de cisaillement (2) et une contre-dépouille (24a, 24b) est prévue sur au moins un côté de l'évidement (22).

2. Appareil de coupe selon la revendication 1, **caractérisé en ce qu'**au moins un élément de fixation (23) est prévu, dont l'orientation s'étend sous un angle oblique ε par rapport à la surface d'appui (13), de préférence sous un angle aigu ε par rapport à la surface d'appui (13), considérée en direction de l'arête de coupe (16).

3. Appareil de coupe selon au moins l'une des revendications précédentes, **caractérisé en ce qu'**une première section de surface (17a) de la surface externe (14) s'étend depuis l'arête de coupe (16) le long de l'orthogonale O, qui rencontre la surface d'appui (13) dans la zone de l'arête de coupe (16), ou sous un angle aigu α par rapport à l'orthogonale O,
une deuxième section de surface (17b) se rattache à l'extrémité de la première section de surface (17a) et est orientée sous un angle aigu β par rapport à l'orthogonale O,
une troisième section de surface (17c) se rattache à l'extrémité de la deuxième section de surface (17b) et est orientée sous un angle aigu γ par rapport à l'orthogonale O,
l'angle α étant inférieur à l'angle β et l'angle β étant inférieur à l'angle γ.

4. Appareil de coupe selon la revendication 3, **caractérisé en ce que**, à chaque fois considérée en coupe transversale de la lame de cisaillement, la largeur de la première section de surface (17a) est inférieure à la largeur de la deuxième section de surface (17b) et la largeur de la deuxième section de surface (17b) est inférieure à la largeur de la troisième section de surface (17c).

5. Appareil de coupe selon la revendication 3 ou 4, **caractérisé en ce que** l'angle α se situe dans une plage de 0,5° à 5°, de préférence dans une plage de 1° à 3°, de manière particulièrement préférée dans une plage de 1,5° à 2,5°.

6. Appareil de coupe selon au moins l'une des revendications 3 à 5, **caractérisé en ce que** l'angle γ est supérieur/égal à 45°, de préférence supérieur/égal à 48°, de manière particulièrement préférée supérieur/égal à 50°.

7. Appareil de coupe selon au moins l'une des revendications précédentes, **caractérisé en ce que**, dans la zone de la surface externe (14), un profilage de surface (19) est prévu, le profilage de surface (19) comprenant différentes rainures (20) s'étendant les unes à côté des autres.

8. Appareil de coupe selon la revendication 7, **caractérisé en ce que** le profilage de surface (19) est uniquement prévu dans la zone de la deuxième et/ou troisième section de surface (17b et/ou 17c), de préférence dans la zone des deux sections de surface (17b, 17c).

9. Appareil de coupe selon la revendication 8, **caractérisé en ce que** le profilage de surface (19) s'étend à chaque fois sur la largeur complète de la section de surface respective (17b et/ou 17c).

10. Appareil de coupe selon la revendication 7 à 9, **caractérisé en ce que** les rainures (20) présentent à chaque fois deux parois (20a, 20b) de rainure opposées, une paroi (20a) de rainure s'étend de manière raide, de préférence incurvée, et l'autre paroi (20b) de rainure s'étend de manière aplatie, la paroi (20a) de rainure s'étendant de manière raide étant agencée sur le côté de la rainure (20) respective qui est orienté vers la pointe (9a) de lame de la lame de cisaillement (2).

11. Appareil de coupe selon la revendication 7 à 10, **caractérisé en ce que** la rainure (20) est réalisée en forme de U, en forme de V ou en forme trapézoïdale.

12. Appareil de coupe selon au moins l'une des revendications précédentes, **caractérisé en ce que** l'arête de coupe (16) est incurvée de manière concave.

13. Appareil de coupe selon au moins l'une des revendications précédentes, **caractérisé en ce que** la zone de montage (18) est pourvue d'une ouverture de passage (11) pour la réception d'un élément d'axe de rotation commun à une paire de lames de cisaillement et d'une ouverture de passage (12) pour un élément d'actionnement côté entraînement.

14. Appareil de coupe selon au moins l'une des revendications précédentes, **caractérisé en ce que** l'appareil de coupe est un appareil de sauvetage.

15. Appareil de coupe selon au moins l'une des revendications précédentes, **caractérisé en ce qu'**une contre-dépouille (24a), 24b) est prévue sur les deux côtés de l'évidement (22).
